# EUROPEAN PATENT SPECIFICATION

(11) **EP 2 758 348 B1**
(45) Date of publication and mention of the grant of the patent: **26.02.2020**
(21) Application number: 12772608.1
(22) Date of filing: 20.09.2012
(51) Int. Cl.: C02F 1/76, C02F 1/50, C02F 103/42, A01N 43/64, A01N 43/50, A01N 59/00

(54) **WATER TREATMENT COMPOSITION CONTAINING HALOGEN-RELEASING COMPOUND AND FLUOROPOLYMER**
WASSERBEHANDLUNGZUSAMMENSETZUNG MIT EINER HALOGENABGEBENDEN VERBINDUNG UND EINEM FLUORPOLYMER
COMPOSITION DE TRAITEMENT DE L'EAU CONTENANT UN COMPOSÉ DE LIBÉRATION D'HALOGÈNE ET UN FLUOROPOLYMÈRE

(30) Priority: 20.09.2011 US 201161536654 P
(43) Date of publication of application: 30.07.2014
(73) Proprietor: Innovative Water Care, LLC, Wilmington, DE 19801 (US)
(72) Inventor: UNHOCH, Michael J., Tyrone, Georgia 30290 (US); WISE, Nicole, Jonesboro, Georgia 30238 (US); PARISH, Derek Francis, Peachtree City, GE 30269 (US)
(74) Representative: Pizzoli, Antonio
(86) International application number: PCT/US2012/056349
(87) International publication number: WO 2013/043880

(56) References cited:
- WO-A1-2005/033004
- FR-A1- 2 944 785
- US-A- 5 009 806
- US-A1- 2005 155 936
- US-A1- 2006 078 584

## Description

### FIELD OF THE INVENTION

The invention relates to water treatment compositions, and more particularly to slow dissolving water treatment compositions that include at least one halogen-releasing compound and a fluoropolymer.

### BACKGROUND OF THE INVENTION

Chlorine releasing compounds have been used in a wide variety of applications as a sanitizer or disinfectant including in for many applications, including pools and spas, preventing and curing diseases in fisheries, fruits and vegetables preservation, wastewater treatment, algaecide for recycling water of industry and air conditioning, and the like. In some applications, particularly swimming pools and spas, it is desirable to have chlorine to slowly be released into the water. This provides continuous dosing of chlorine to the water. Examples of slow chlorine releasing compounds include chlorinated isocyanuric acids compounds and chlorinated hydantoins.

Trichloroisocyanuric acid (also known as TCCA, "trichlor", and trichloro-s-triazinetrione) is a widely used chemical sanitizer for many applications. For pools and spas, TCCA is particularly useful because it imparts approximately 90% chlorine to the water, and is therefore easy to use for large pools. In addition, TCCA is stable and can reduce chlorine loss during sun exposure.

One advantage of TCCA in pool and spa applications is that it dissolves slowly in water, allowing for continuous dosing of available chlorine, especially when in tablet form. TCCA tablets dissolve and erode over time when placed in a swimming pool skimmer basket. Erosion is the dominant mechanism when the pool pump is running and dissolution is the primary mechanism when the pool pump is turned off (static dissolution). Due to the continued dissolution of tablet under static conditions, a high concentration of chlorine is built up in the skimmer and plumbing leading to the pump. In addition to the chlorine level, this same water has a low pH and the combination of these two chemical parameters will contribute to bleaching or fading of vinyl pool liners. This condition does not present itself when the pump is running because any chlorine delivered is immediately diluted via circulation into the large body of water in the pool. This condition is further exacerbated when other soluble salts are formulated with the TCCA in the tablet, since the soluble salts tend to increase the rate of dissolution of the TCCA from the tablet. As such, formulated tablets of TCCA dissolve even faster than tablets containing only TCCA, which are also referred to as non-formulated tablets. It would be advantageous if the static dissolution rate could be controlled in order to prevent both high chlorine level and low pH resulting from continued dissolution of the tablet.

Calcium hypochlorite, another sanitizer used in pools and spas, is a rapidly dissolving chlorine sanitizer. Attempts have been made to reduce the dynamic and overall dissolution rate of calcium hypochlorite by adding inert polymers to stick or tablet formulations. For example, U.S. Patent Nos. 4,865,760; 4,970,020; 5,009,806; and 5,205,961 to PPG Industries all disclose compositions of granular calcium hypochlorite combined with finely divided polyfluorinated polymer, e.g., polytetrafluoroethylene, dispersed throughout the composition. The polyfluorinated polymer functions to, among other things, reduce the dissolution rate of the calcium hypochlorite. WO 2005/033004, US 2005/155936, FR 2944785 and US 5009806 disclose further known water treatment compositions. However, what remains a need in the art for additional sanitizer compositions with advantageous slow static dissolution rates.

### SUMMARY OF THE INVENTION

In one aspect, the present invention is directed to a water treatment according to claim 1.

In one particular embodiment, the invention is directed to a water treatment composition, comprising: 50 - 99 wt.% of particulate halogen-releasing compound; 1 - 10 wt.% of sodium hexametaphosphate (SHMP); 1 - 10 wt.% of aluminum sulfate; 0.5 - 15 wt.% of a sulfate salt selected from the group consisting of copper sulfate, zinc sulfate, and combinations thereof; and 0.75-2.0 wt.% of particulate polytetrafluoroethylene polymer, wherein all weight percentages are based on the total weight of the composition.

In another embodiment, the invention is directed to a water treatment composition, comprising: 50 - 99 wt.% of particulate halogen-releasing compound; 1 - 10 wt.% of sodium hexametaphosphate; 0.5 - 15 wt.% of a sulfate salt selected from the group consisting of copper sulfate, zinc sulfate, and combinations thereof; and 0.75-2.0 wt.% of particulate polytetrafluoroethylene polymer, wherein all weight percentages are based on the total weight of the composition.

These and other aspects will become evident from the following written description of the invention.

### BRIEF DESCRIPTION OF THE FIGURES

Figure 1 is a graph illustrating percent dissolved per hour of the compositions of the invention;
Figure 2 is a graph illustrating percent dissolved per hour of the compositions of the invention in a static environment;
Figure 3 is a graph illustrating percent dissolved per hour of the compositions of the invention in a dynamic environment;
Figure 4 is a graph illustrating percent dissolved per hour of the compositions of the invention;
Figure 5 is a graph illustrating percent dissolved per hour of the compositions of the invention in a static environment;
Figure 6 is a graph illustrating percent dissolved per hour of the compositions of the invention in a dynamic environment;
Figure 7 is a graph illustrating static dissolution comparison of various compositions of the invention;
Figure 8 is a graph illustrating dynamic dissolution comparison of various compositions of the invention;
Figure 9 is a graph illustrating overall dissolution comparison of various compositions of the invention; and
Figure 10 is a graph illustrating 24-hour dissolution comparison of various compositions of the invention.

### DETAILED DESCRIPTION OF THE INVENTION

It has been discovered that forming a blend of a particulate polyfluorinated polymer and a particulate halogen-releasing compound, and forming a unitary structure from the blend, will provide a unitary structure having a controlled dissolution rate, thus allowing the unitary structure of the blend to last longer and need to be replaced less often. A unitary structure having a slower static dissolution rate has the added benefit of keeping the amount of available chlorine in the skimmer and plumbing lower and pH more neutral which decreases the potential damage of pool skimmers and vinyl liners due to high chlorine levels.

In the present invention, the term "unitary structure" is intended to be a single solid form of the particulate components. Generally, the unitary structure is the blend of components compacted into a single solid structure. Examples of unitary structures include sticks, tablets and other similar structures.

In the present invention, the term "particulate" is intended to be particles in the form of a powder, granules, fibers and mixtures thereof. Particulates may be non-agglomerated or agglomerated.

In the present invention, the term "formulated" means that the composition has additional functional ingredients in addition to the halogen-releasing compound and the fluoropolymer which are designed to treat the pool water. "Non-formulated" means a composition which only contains the halogen-releasing compound and the fluoropolymer and is free of other functional ingredients intended to treat the pool water.

As indicated above, the invention is a water treatment composition, comprising: 50 - 99.9 wt.% of a particulate halogen-releasing compound; and 0.1 - 10 wt.% of particulate fluoropolymer, wherein all weight percentages are based on the total weight of the composition. Each of these components is described in more detail below.

The first component of the invention is a halogen-releasing compound. Suitable halogen-releasing compounds include chlorinated isocyanuric acids, such as, trichloroisocyanuric acid (TCCA), and dichloroisocyanuric acid (DCCA), for example, and halogen-containing hydantoins, including both chlorine-containing hydantoins and bromine-containing hydantoins such as bromochlorodimethylhydantoin (BCDMH); dibromodimethylhydantoin (DBDMH), dichlorodimethylhydantoin (DCDMH), dichloromethylethylhydantoin (DCMEH), and the like. Of these compounds, trichloroisocyanuric acid, also known as TCCA, "trichlor", and trichloro-s-triazinetrione, is of particular interest.

Generally, the halogen-releasing compound is present in the composition in an amount from 50-99.9% by weight of the composition. When the composition is to be used to prepare a non-formulated unitary structure, the halogen-releasing compound is generally present in higher amounts. Typically, in a non-formulated composition, the halogen-releasing compound is present in an amount from about 90-99.9% by weight of the composition, and generally from about 96% to about 99.5% by weight of the composition. When the composition is to be used as a formulated composition, the halogen-releasing compound is present in lesser amounts. The halogen-releasing compound then typically present in an amount between about 60% and about 99% by weight of the composition, more typically in amount between about 70% and about 98% by weight of the composition and most typically between about 90% and about 96% by weight of the composition. All weight percentages are based on the total weight of all of the components of the composition. Typically, the halogen-releasing compound is present as a particulate material.

The second component of the invention is a particulate polyfluorinated polymeric material or fluoropolymer. Examples of polyfluorinated polymeric materials that may be used as the compaction aid include: polytetrafluoroethylene (PTFE), polychlorotrifluoroethylene, polyhexafluoropropylene, copolymers of chlorotrifluoroethylene and ethylene, copolymers of ethylene and tetrafluoroethylene, copolymers of hexafluoropropylene and tetrafluoroethylene, copolymers of vinylidene fluoride with tetrafluoroethylene, hexafluoropropylene, chlorotrifluoroethylene or pentafluoropropylene, and terpolymers of vinylidene fluoride, hexafluoropropylene and tetrafluoroethylene. Other fluoropolymers derived from fluoroalkyl acrylates, such as poly(1,1-dihydroperfluorobutyl acrylate), poly(3-perfluoromethoxy-1,1-dihydroperfluoropropyl acrylate), poly(trifluoroisopropyl methacrylate) and the condensation product of adipic acid and 2,2,3,3,4,4-hexafluoropentanediol may also be used. The polyfluorinated polymer may be added to the particulate halogen-releasing compound as a particulate material, such as a finely-divided dry powder, granules, fibrous material and the like. Polytetrafluoroethylene (PTFE) has been found to be effective in the present invention. The particulate fluoropolymer is present in the composition in an amount of 0.1-10% by weight, generally in an amount between about 0.2% and about 7.5% and typically between about 0.25% and about 5.0% by weight of the blend. In a particular embodiment, the fluoropolymer is present in an amount between about 0.5% and about 2.0% by weight in the blend all weight percentages being based on the total weight of the composition.

Suitable commercially available polytetrafluoroethylene (PTFE) useable in the present invention include Zonyl® MP1200, available commercially from DuPont (Wilmington, DE), Peflu available from M F Cachet, and DougYue F16A, available from ShanDong DougYue Polymer Material, LTD, Shandong, China. The PTFE may be essentially non-agglomerated, as is the Zonyl® MP 1200 or may be agglomerated, as is the DongYue DF16A. One particularly preferred fluoropolymer is Zonyl® MP1200, available commercially from DuPont (Wilmington, DE). Generally, the particulate fluoropolymer has particles having a particle size in the range of about 1.0 to about 15 micron with an average particle in the 3 to 5 micron range. When the fluoropolymer is agglomerated, there are more than about 50% of particles are packed together to form particle agglomerations having a particle agglomeration size in the 10-50 micron range. Analysis of the DongYue DF 16A found the particles are particles having a size between about 1 micron and 15 microns and particle agglomerations in the range of about 10-40 microns in size. In contrast, the essentially non-agglomerated Zonyl® MP 1200 contained mostly loose particles having a particle size in the range of about 1-10 microns, and very few agglomerations in the range of 10-15 microns in size.

Additional ingredients may also be included in the composition of the invention. In one embodiment, additional water-treatment chemicals such as aluminum sulfate salt, copper sulfate salt, zinc oxide, and zinc sulfate salt may be added to the composition individually or in any combination. Further additional water treatment chemicals include sequestering agents such as citric acid, sodium hexametaphosphate, and the like, phosphate reducers, polymeric clarifiers, dichlor, cyanuric acid, and the like. In one embodiment, the composition of the invention includes 1 - 10 wt.% of aluminum sulfate, and more typically 0.2 - 4 wt.% of aluminum sulfate, based on the total weight of the composition. In another embodiment, the composition of the invention may include 0.5 - 15 wt.%, and more typically 1 - 4 wt.% of copper sulfate, zinc sulfate, or a combination thereof, based on the total weight of the composition. The composition of the invention may also include up to about 3 wt.% of cyanuric acid, based on the total weight of the composition.

The components of the composition can be dry blended or spray coated and compacted into a unitary structure of a desired shape and/or size. Exemplary shapes include, for example, a stick, a tablet, a pellet, a briquette, a brick and the like. The size of the unitary structure is generally selected for the preferred end use. For example, if the unitary structure is intended to be used in a pool skimmer, the size and the shape should be such that it easily fits in a typical pool skimmer. Alternatively if the unitary structure is to be placed in an in-line or off-line erosion feeder, or other structure such as a floater, again the size and shape for the unitary structure should be appropriate for its end use. The unitary structure can generally weigh up to 300 grams or more, again depending on its intended end use. Generally, the unitary structure of the composition will be around 200-250 grams.

In addition to providing a slower rate of dissolution, the fluoropolymer may also provide and advantage in forming the unitary structure from the composition. The fluoropolymer may alleviate the need or a mold release, such as boric acid, from being compounded with the composition of the present invention. That is, the fluoropolymer may provide mold release properties to the unitary structure. Alternatively, a mold release agent may additionally be added to the composition to aid in the release of the unitary structure from the mold used to shape and form the composition into a unitary structure. Boric acid is generally used as the mold release agent, and is it typically added in an amount up to 5% by weight. Typically boric acid will be added in an amount around 0.25% to 0.75% by weight.

To form a unitary structure, the components of the composition are blended together using known techniques, such as a paddle blender and the like, to form an essentially homogenous mixture. Once the components are mixed, a portion of the components are placed in a die and compressed with sufficient pressure such that the mixture of components of the composition are brought together and form a unitary structure.

A more complete understanding of the present invention can be obtained by referring to the following illustrative examples of the practice of the invention, which examples are not intended, however, to limit the invention.

### EXAMPLES

### Example 1

Various 30 gram (g) sticks, labeled as Samples A-G were formed using the process described below containing the composition shown in Table 1.

**TABLE 1 Formulations**

| Sample | TCCA | PFTE | Copper Sulfate | Aluminum Sulfate | Zinc Sulfate |
|---|---|---|---|---|---|
| A | 30 g | - | - | - | - |
| B | 29.40 g | 0.6 g | - | - | - |
| C | 29.475 g | 0.525 g | - | - | - |
| D | 28.05 g | - | 0.45 g | 1.5 g | - |
| E | 28.05 g | 0.6 g | 0.45 g | 0.9 g | - |
| F | 28.32 g | 0.6 g | - | 0.18 g | 0.9 g |
| G | 28.32 g | 0.525 g | - | 0.255 g | 0.9 g |

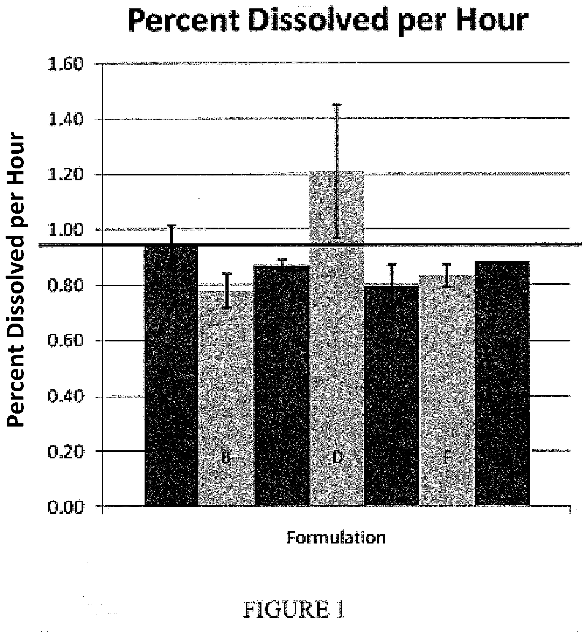

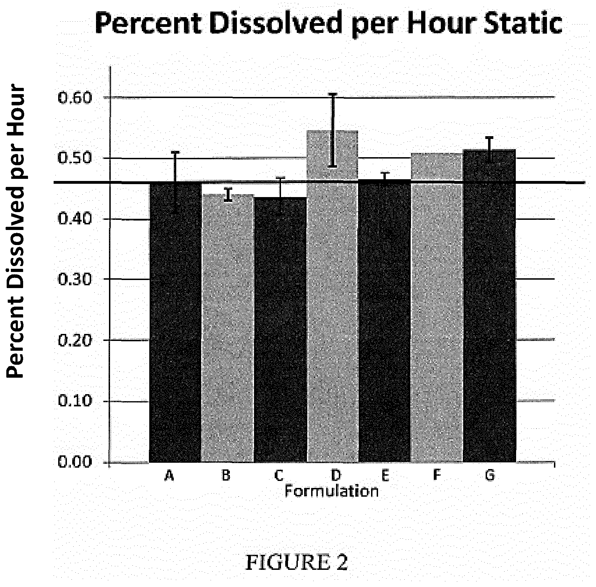

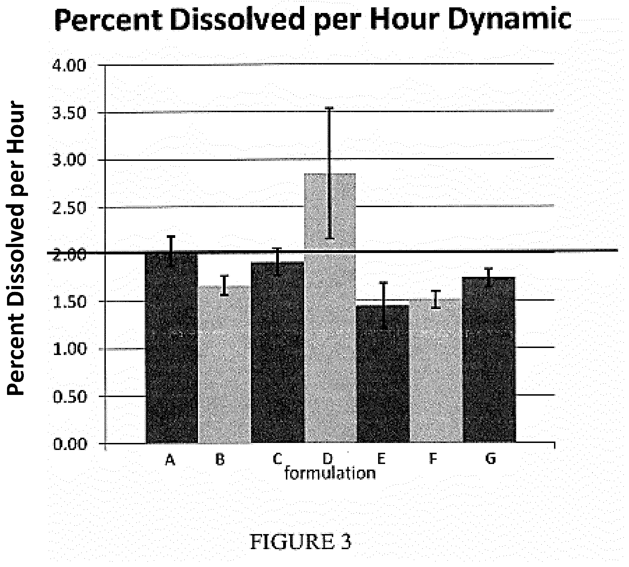

Each of the samples, except Sample A, were blended by adding the components in the amounts listed to a HDPE bottle and inverting and rolling for a minimum of 60 seconds (sec) to produce 30 g compositions. Once blended, mixed components were poured into a die, the punch was added and a stick was pressed. Samples B, E and F each contain 2 wt.%. PTFE and Samples C and G contain 1.75 wt.% PTFE. Samples A and D do not contain PTFE and are Comparative Examples. Once the compositions were pressed the weight, length, and diameter were measured. Density of each stick was required to be within +/- 0.2 of 1.75 grams per centimeter³ (g/cm³). After meeting density requirements the stick was tested in dissolution rate testing. Sticks were placed in water for 30 min, removed and wet weight was measured. After recording the weight, the sticks were placed into skimmer baskets inside of 10 gallon tanks that contained a heater (set to 80-85° F) and a filter was run for 7 hours a day to simulate pool operation. The skimmer basket was connected to the pump so that the water flowed over the stick when the filter was running. Sticks were weighed daily before starting filter and after stopping filter, giving weights for static and dynamic periods. Percent dissolution was calculated for each day and for each static and dynamic cycle. Figure 1 shows the average dissolution rate per hour of each of the sticks. Figures 2 and 3 show the static and dynamic dissolution rates of the formulations. All values on charts represent averages of each stick, since all formulations were tested at least twice.

The data in Figures 1 - 3 show the effect of the polytetrafluoroethylene polymer on the overall, static and dynamic dissolution rates for TCCA and TCCA formulations with copper and zinc salts. The effect was more pronounced for the dynamic dissolution rate than the static, but nonetheless was present for both conditions.

### Example 2

Trichlor tablets were prepared using PTFE (Teflon) and cyanuric acid (CYA) to slow the dissolution rate. Components were weighed out, in the amounts shown in Table 2.

**Table 2 Formulations**

| Sample | TCCA | PTFE | CYA |
|---|---|---|---|
| H | 30 g | - | - |
| I | 29.55 g | 0.45 g | - |
| J | 29.475 g | 0.525 g | - |
| K | 28.95 g | 0.45 g | 0.6 g |
| L | 29.1 g | 0.3 g | 0.6 g |
| M | 29.025 g | 0.375 g | 0.6 g |
| N | 28.8 g | 0.3 g | 0.9 g |
| O | 28.35 g | 0.45 g | 1.2 g |
| P | 28.275 g | 0.525 g | 1.2 g |

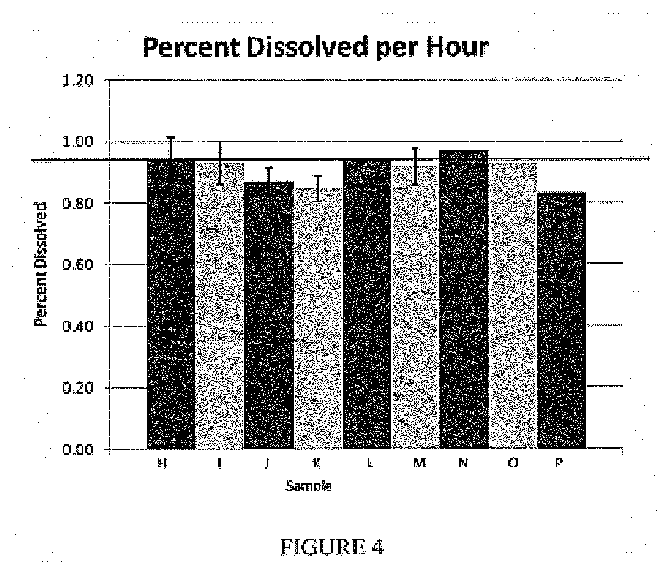

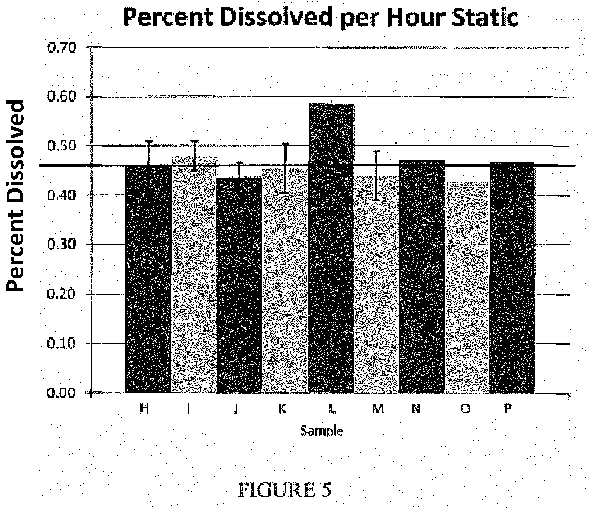

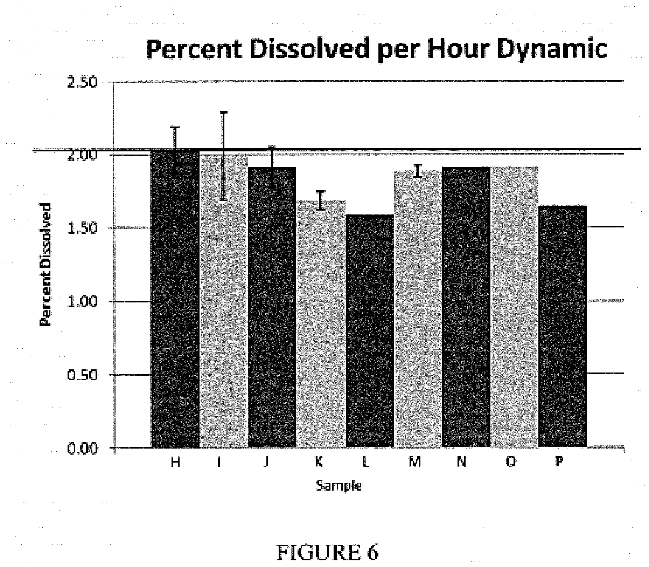

Each composition shown in Table 2 is blended to make 30 g blended compositions as described in Example 1, and pressed into sticks, as described in Example 1. After initial weights and wet weights were taken, the dissolution rate of the sticks was determined using the same tank set up as in Example 1. The weights of the sticks were recorded prior to starting the filter and after the filter was turned off, giving overall, static, and dynamic dissolution rates. Different levels of PTFE and cyanuric acid were blended with one another and tested for dissolution rate. The dissolution rates are shown in Figures 4, 5, and 6. Figure 4 shows the average dissolution rate per day for each stick, and Figures 5 and 6 show the static and dynamic dissolution rates. These data show that overall, dynamic and static dissolution is affected by the addition of cyanuric acid and PTFE at almost all levels. The ideal levels of PTFE on and cyanuric acid are found to be 1.5% PTFE and 2% cyanuric acid. This example shows that cyanuric acid may be added to a stick/tablet in combination with PTFE in order to slow the dissolution of the stick product.

### Example 3

Various Formulations were tested for static, dynamic, and overall dissolution rates. The tested formulations include the following compositions:
Sample Q is prepared from a blend 98.0 wt.% TCCA and 2 wt.% PTFE;
Sample R is prepared from a blend 98.25 wt.% TCCA + 1.75 wt.% PTFE;
Sample S is prepared from a blend containing 98.5 wt.% TCCA + 1.5 wt.% PTFE;
Sample T which is Silk Smart Sticks® from BioGuard® (TCCA and glycoluril as described in U.S. Patents 5,888,939 and 5,670,451) (comparative example); and
Sample U is 100 wt.% TCCA (comparative example).

Each of the Samples Q, R, S and U are made into stick having a weight of about 230g each, using the process as described in Example 1. Each of the Samples were dissolution tested, where each of the Samples were tested in different pools in order to minimize the influence the pool may have on dissolution rates and to give more representative numbers.

This series of tests utilized 5,000-10,000 gallon pools, with pumps, filters and heaters running 8 hours (dynamic dissolution) and left off for 16 hours (static dissolution) each day. Electronic flow meters were placed on pools to ensure the flow of each was consistent with the one another. The target flow rate for each pool was 30 gallons per minutes (gpm). Heaters were set to 85° +/- 5°C. The number of replicates, average temperatures and flow rates for each stick are listed in Table 3.

**Table 3**

| | Replications | Average Temperature | Average Flow Rate |
|---|---|---|---|
| TCCA Stick | 3 | 81.34 +/- 2.74 | 30.57 +/- 0.55 |
| 1.5% PTFE Stick | 2 | 81.78 +/- 1.52 | 30.71 +/- 0.24 |
| 1.75% PTFE Stick | 6 | 83.91 +/- 1.65 | 31.13 +/- 1.72 |
| 2% PTFE Stick | 2 | 80.93 +/- 3.92 | 30.78 +/- 0.34 |
| BioGuard® Silk Smart Sticks® | 4 | 83.77 +/- 1.79 | 30.77 +/- 0.41 |

The water was balanced and each of the sticks were placed into skimmer baskets of the designated pool, and static and dynamic dissolution rates were measured after 16 hour period and 8 hour period, respectively. The total dissolution rate was calculated by combining the two dissolution rates.

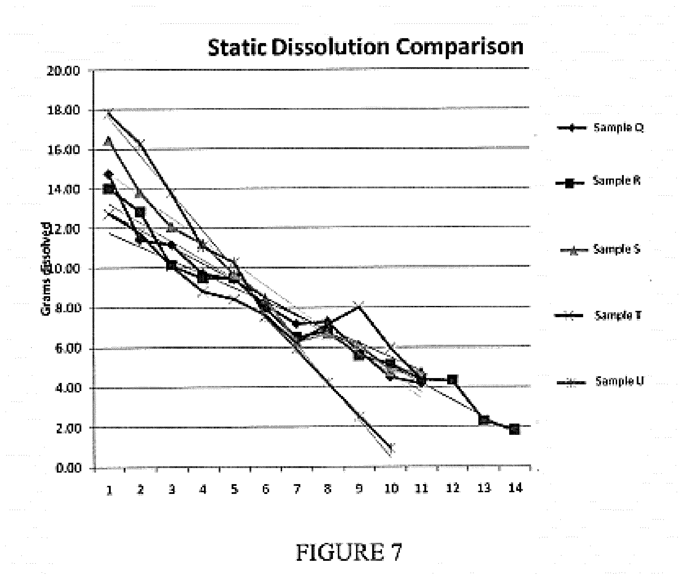

Figure 7 shows a comparison of each of the formulations static dissolution rates over 10 days (1.75 wt.% PTFE has data for up to 14 days since more sticks were tested). Figure 7 illustrates that addition of PTFE slows the static dissolution of 100 wt.% trichlor. Figure 7 also illustrates that static dissolution rates of the sticks containing PTFE are very similar to the static dissolution rate of the BioGuard® Silk Smart Sticks®; based on the slopes of each line.

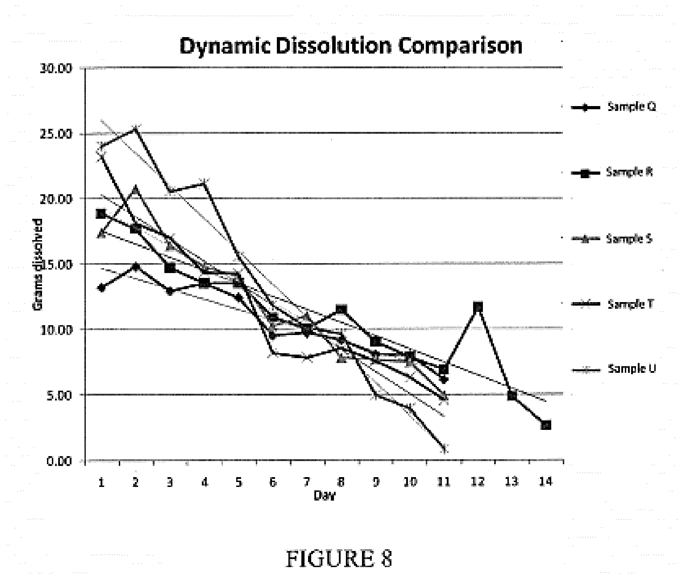

The dynamic dissolution rate of each formulation is compared in Figure 8. Figure 8 shows that the PTFE is also successful at significantly reducing the dynamic dissolution rate of the trichlor.

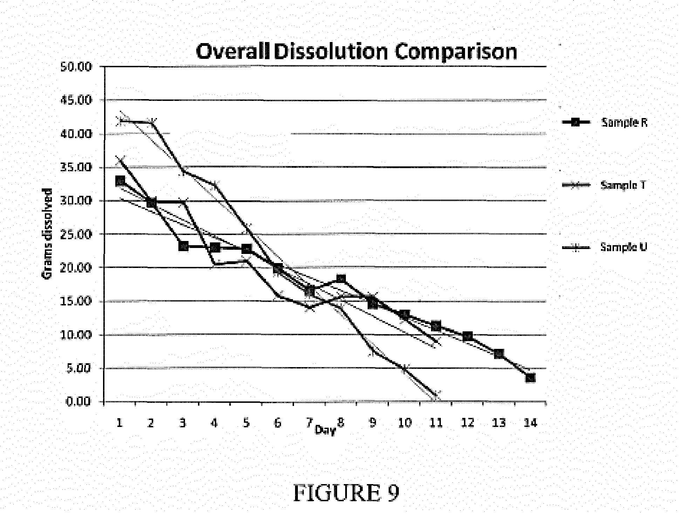

Figure 9 shows a comparison of the overall dissolution rates of Samples R, T and U. This comparison shows that the addition of PTFE slows the overall dissolution of the trichlor to a level that is near that of the Silk Smart Sticks®.

Based on testing in skimmers, it was found that the straight TCCA sticks last for about 11 days before completely dissolved, and the Silk Smart Sticks®, and 1.75 wt.% PTFE sticks last about 16 days before dissolved. These data were found in a 5,000 gallon pool, 1 stick per skimmer, average temperature in a range of 80-85° F, and pump running 8 hours a day.

### Example 4

In this Example, the 24-hour dissolution rate was tested. Test utilized 5,000-10,000 gallon pools with pumps, filters and heaters running 24 hours a day. Electronic flow meters were placed on pools to ensure the flow of each was consistent with the one another. The target flow rate for each pool was 30 gpm. Heaters were set to 85° +/- 5°C. Each run was conducted until sticks were completely dissolved. The water was balanced and each of the sticks was placed into skimmer baskets of the designated pool. The sticks were weighed once daily. The average temperatures and flow rates for each stick are listed in Table 4.

**Table 4**

| | **Average Temperature** | **Average Flow Rate** |
|---|---|---|
| **1.75% PTFE Stick** | 85.23 +/- 3.35 | 30.95 +/- 1.01 |
| **Silk Smart Sticks®** | 86.28 +/- 2.85 | 30.59 +/- 0.32 |
| **1.75% PTFE Stick (bagged)** | 87.7 +/- 1.57 | 31.26 +/- 0.36 |

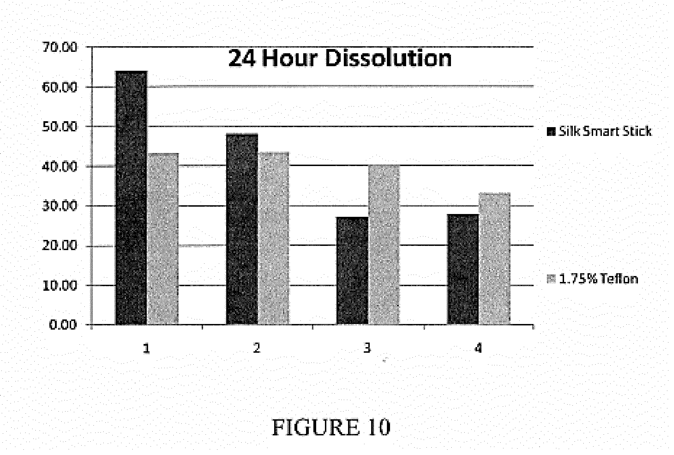

The results in Figure 10 show that the 1.75 wt.% PTFE stick has a constant rate of dissolution over the week. It was found that the Silk Smart Sticks® lasted about 8 days before completely dissolving, whereas, the 1.75 wt.% about 10 days before becoming completely dissolved. It is believed that the PTFE slows the dynamic dissolution of TCCA better than the Silk Smart Sticks® formulation.

### Example 5

Various Formulations were tested for time for a stick to dissolve in a pool skimmer. The tested formulations include the following compositions:
Sample V is prepared from a blend 99.0 wt.% TCCA and 1 wt.% PTFE DF16A available from DongYue;
Sample W is prepared from a blend 98.75 wt.% TCCA + 1.25 wt.% PTFE DF16A available from DongYue; and
Sample X is prepared from a blend containing 100 wt.% TCCA (comparative example).

Each of the Samples V, W, and X are made into stick having a weight of about 230g each, using the process as described in Example 1. Each of the Samples were dissolution tested, where each of the Samples were tested in different pools in order to minimize the influence the pool may have on dissolution rates and to give more representative numbers. The process of example 3 was repeated to obtain 8 hour pump time run and 16 hours of static dissolution and the process of example 4 was repeated to obtain 24 hour pump run data to determine the time needed to dissolve the sticks. 23 tablets for each sample were tested and the average number of days for the sticks to dissolve are shown in Table 5.

**TABLE 5 Average Days To Stick Dissolved**

| | 8 hour/day pump run | 24 hour/day pump run |
|---|---|---|
| Sample V | 10.25 days | 9.14 days |
| Sample W | 8.6 days | 8.71 days |
| Sample X | 5 days | 5 days |

While the invention has been described above with references to specific embodiments thereof, it is apparent that many changes, modifications and variations can be made without departing from the invention concept disclosed herein. Accordingly, it is intended to embrace all such changes, modifications, and variations that fall within the spirit and broad scope of the appended claims.

## Claims

1. A water treatment composition, comprising a unitary structure formed from a blend of:
(i) 50 - 99.25 wt.% of a particulate halogen-releasing compound comprising chlorinated isocyanuric acids; and
(ii) 0.75 - 2.0 wt.% of particulate fluoropolymer to slow the dissolution rate of the halogen-releasing compound in water,
wherein all weight percentages are based on the total weight of said composition.

2. The water treatment composition according to claim 1, wherein the halogen-releasing compound comprises particulate trichloroisocyanuric acid.

3. The water treatment composition according to claim 2, wherein said particulate trichloroisocyanuric acid comprises from 90 wt.% to 96 wt.%, based on the total weight of the composition.

4. The water treatment composition according to claim 1, wherein said fluoropolymer is polytetrafluoroethylene polymer.

5. The water treatment composition according to claim 1, further comprising 1 - 10 wt.% of aluminum sulfate, based on the total weight of the composition.

6. The water treatment composition according to claim 1, further comprising 0.5 - 15 wt.%, in particular between 1 wt.% and 4 wt.%, of a sulfate salt selected from the group consisting of copper sulfate, zinc sulfate, and combinations thereof, based on the total weight of the composition.

7. The water treatment composition according to claim 1, further comprising cyanuric acid, and the cyanuric acid is present in an amount up to 3 wt.% of cyanuric acid, based on the total weight of the composition.

8. The water treatment composition according to claim 1, further comprising 0.2 - 4 wt.% of aluminum sulfate, based on the total weight of the composition.

9. The water treatment composition according to claim 1 or 3, wherein said composition further comprises zinc oxide, citric acid, boric acid, sodium hexametaphosphate, phosphate reducers, polymeric clarifiers, dichlor, cyanuric acid, boric acid and combinations thereof.

10. The water treatment composition according to claim 1, further comprising
1 - 10 wt.% or 0.2 - 4 wt.% of aluminum sulfate; and
0.5 - 15 wt.%, in particular between 1 wt.% and 4 wt.%, of a sulfate salt selected from the group consisting of copper sulfate, zinc sulfate, and combinations thereof; all weight percent are based on the total weight of said composition.

11. The water treatment composition according to claim 1 or 10, further comprising 1 - 10 wt.% of sodium hexametaphosphate (SHMP) and 0.5 - 15 wt.% of a sulfate salt selected from the group consisting of copper sulfate, zinc sulfate, and combinations thereof; based on the total weight of said composition.

12. The water treatment composition according to claim 1, wherein the fluoropolymer is in the form of agglomerated particles.

13. The water treatment composition according to claim 1, wherein the fluoropolymer is in the form of essentially non-agglomerated particles.

14. The water treatment composition according to claim 1, wherein the halogen-releasing compound comprises a mixture of particulate trichloroisocyanuric acid and a halogen containing hydantoin.

## Patentansprüche

1. Eine Zusammensetzung zur Wasserbehandlung, umfassend eine einheitliche Struktur, gebildet aus einer Mischung von:
(i) 50 - 99,25 Gew.-% einer partikelförmigen, Halogen freisetzenden Verbindung umfassend chlorierte Isocyanursäuren; und
(ii) 0,75 - 2,0 Gew.-% eines partikelförmigen Fluorpolymers, um die Auflösungsrate der Halogen freisetzenden Verbindung in Wasser zu verlangsamen,
wobei alle Gewichtsprozentangaben auf das Gesamtgewicht der besagten Zusammensetzung bezogen sind.

2. Die Zusammensetzung zur Wasserbehandlung gemäß Anspruch 1, wobei die Halogen freisetzende Verbindung partikelförmige Trichlorisocyanursäure umfasst.

3. Die Zusammensetzung zur Wasserbehandlung gemäß Anspruch 2, wobei die besagte partikelförmige Trichlorisocyanursäure zwischen 90 Gew.-% und 96 Gew.-%, bezogen auf das Gesamtgewicht der Zusammensetzung, ausmacht.

4. Die Zusammensetzung zur Wasserbehandlung gemäß Anspruch 1, wobei das besagte Fluorpolymer ein Polytetrafluorethylenpolymer ist.

5. Die Zusammensetzung zur Wasserbehandlung gemäß Anspruch 1, ferner umfassend 1 - 10 Gew.-% Aluminiumsulfat, bezogen auf das Gesamtgewicht der Zusammensetzung.

6. Die Zusammensetzung zur Wasserbehandlung gemäß Anspruch 1, ferner umfassend 0,5 - 15 Gew.-%, insbesondere zwischen 1 Gew.-% und 4 Gew.-%, eines Sulfatsalzes, ausgewählt aus der Gruppe bestehend aus Kupfersulfat, Zinksulfat, sowie Kombinationen daraus, bezogen auf das Gesamtgewicht der Zusammensetzung.

7. Die Zusammensetzung zur Wasserbehandlung gemäß Anspruch 1, ferner umfassend Cyanursäure, wobei die Cyanursäure in einer Menge von bis zu 3 Gew.-% Cyanursäure vorliegt, bezogen auf das Gesamtgewicht der Zusammensetzung.

8. Die Zusammensetzung zur Wasserbehandlung gemäß Anspruch 1, ferner umfassend 0,2 - 4 Gew.-% Aluminiumsulfat, bezogen auf das Gesamtgewicht der Zusammensetzung.

9. Die Zusammensetzung zur Wasserbehandlung gemäß Anspruch 1 oder 3, wobei die besagte Zusammensetzung weiterhin umfasst: Zinkoxid, Zitronensäure, Borsäure, Natriumhexametaphosphat, Phosphatreduktionsmittel, polymere Klärsubstanzen, Dichlorisocyanursäure, Cyanursäure, Borsäure und Kombinationen daraus.

10. Die Zusammensetzung zur Wasserbehandlung gemäß Anspruch 1, ferner umfassend
1 - 10 Gew.-% oder 0,2 - 4 Gew.-% Aluminiumsulfat; und
0,5 - 15 Gew.-%, insbesondere zwischen 1 Gew.-% und 4 Gew.-%, eines Sulfatsalzes, ausgewählt aus der Gruppe bestehend aus Kupfersulfat, Zinksulfat, sowie Kombinationen daraus;
wobei alle Gewichtsprozentangaben auf das Gesamtgewicht der besagten Zusammensetzung bezogen sind.

11. Die Zusammensetzung zur Wasserbehandlung gemäß Anspruch 1 oder 10, ferner umfassend 1 - 10 Gew.-% Natriumhexametaphosphat (SHMP) und 0,5 - 15 Gew.-% eines Sulfatsalzes, ausgewählt aus der Gruppe bestehend aus Kupfersulfat, Zinksulfat, sowie Kombinationen daraus; bezogen auf das Gesamtgewicht der Zusammensetzung.

12. Die Zusammensetzung zur Wasserbehandlung gemäß Anspruch 1, wobei das Fluorpolymer in der Form von agglomerierten Partikeln vorliegt.

13. Die Zusammensetzung zur Wasserbehandlung gemäß Anspruch 1, wobei das Fluorpolymer in der Form von essentiell nicht agglomerierten Partikeln vorliegt.

14. Die Zusammensetzung zur Wasserbehandlung gemäß Anspruch 1, wobei die Halogen freisetzende Verbindung eine Mischung aus partikelförmiger Trichlorisocyanursäure und einem Halogen enthaltenden Hydantoin umfasst.

## Revendications

1. Composition de traitement de l'eau, comprenant une structure unitaire formée à partir d'un mélange de :
(i) 50 à 99,25 % en poids d'un composé libérant un halogène particulaire comprenant des acides isocyanuriques chlorés ; et
(ii) 0,75 à 2,0 % en poids d'un polymère fluoré particulaire pour réduire la vitesse de dissolution dans l'eau du composé libérant un halogène,
dans laquelle tous les pourcentages en poids sont basés sur le poids total de ladite composition.

2. Composition de traitement de l'eau selon la revendication 1, dans laquelle le composé libérant un halogène comprend de l'acide trichloroisocyanurique particulaire.

3. Composition de traitement de l'eau selon la revendication 2, dans laquelle ledit acide trichloroisocyanurique particulaire représente de 90 % en poids à 96 % en poids du poids total de la composition.

4. Composition de traitement de l'eau selon la revendication 1, dans laquelle ledit polymère fluoré est un polymère de polytétrafluoroéthylène.

5. Composition de traitement de l'eau selon la revendication 1, comprenant en outre 1 à 10 % en poids de sulfate d'aluminium par rapport au poids total de la composition.

6. Composition de traitement de l'eau selon la revendication 1, comprenant en outre 0,5 à 15 % en poids, en particulier entre 1 % en poids et 4 % en poids d'un sel sulfate choisi dans le groupe constitué par le sulfate de cuivre, le sulfate de zinc et leurs combinaisons, par rapport au poids total de la composition.

7. Composition de traitement de l'eau selon la revendication 1, comprenant en outre de l'acide cyanurique, lequel acide cyanurique est présent en une quantité allant jusqu'à 3 % en poids d'acide cyanurique par rapport au poids total de la composition.

8. Composition de traitement de l'eau selon la revendication 1, comprenant en outre 0,2 à 4 % en poids de sulfate d'aluminium par rapport au poids total de la composition.

9. Composition de traitement de l'eau selon la revendication 1 ou 3, laquelle composition comprend en outre de l'oxyde de zinc, de l'acide citrique, de l'acide borique, de l'hexamétaphosphate de sodium, des réducteurs de phosphate, des clarifiants polymères, du dichlore, de l'acide cyanurique, de l'acide borique et leurs combinaisons.

10. Composition de traitement de l'eau selon la revendication 1, comprenant en outre
1 à 10 % en poids ou 0,2 à 4 % en poids de sulfate d'aluminium ; et
0,5 à 15 % en poids, en particulier entre 1 % en poids et 4 % en poids, d'un sel sulfate choisi dans le groupe constitué par le sulfate de cuivre, le sulfate de zinc et leurs combinaisons ;
tous les pourcentages en poids étant basés sur le poids total de ladite composition.

11. Composition de traitement de l'eau selon la revendication 1 ou 10, comprenant en outre 1 à 10 % en poids d'hexamétaphosphate de sodium (SHMP) et 0,5 à 15 % en poids d'un sel sulfate choisi dans le groupe constitué par le sulfate de cuivre, le sulfate de zinc et leurs combinaisons ; par rapport au poids total de ladite composition.

12. Composition de traitement de l'eau selon la revendication 1, dans laquelle le polymère fluoré est sous la forme de particules agglomérées.

13. Composition de traitement de l'eau selon la revendication 1, dans laquelle le polymère fluoré est sous la forme de particules essentiellement non agglomérées.

14. Composition de traitement de l'eau selon la revendication 1, dans laquelle le composé libérant un halogène comprend un mélange d'acide trichloroisocyanurique particulaire et d'une hydantoïne halogénée.
